# EUROPÄISCHE PATENTSCHRIFT

(11) **EP 1 248 965 B1**
(45) Veröffentlichungstag und Bekanntmachung des Hinweises auf die Patenterteilung: **24.03.2004**
(21) Anmeldenummer: 01909444.0
(22) Anmeldetag: 10.01.2001
(51) Int. Cl.: G05B 9/03

(54) **VERFAHREN ZUR VERHINDERUNG VON FEHLFUNKTIONEN IN EINEM SIGNALVERARBEITENDEN SYSTEM UND PROZESSORSYSTEM**
METHOD FOR PREVENTING MALFUNCTIONS IN A SIGNAL PROCESSING SYSTEM, AND A PROCESSOR SYSTEM
PROCEDE POUR EVITER DES DYSFONCTIONNEMENTS DANS UN SYSTEME DE TRAITEMENT DE SIGNAUX ET SYSTEME DE PROCESSEUR

(30) Priorität: 21.01.2000 DE 10002519
(43) Veröffentlichungstag der Anmeldung: 16.10.2002
(73) Patentinhaber: SIEMENS AKTIENGESELLSCHAFT, 80333 München (DE)
(72) Erfinder: KUCERA, Markus, 93059 Regensburg (DE); DOERICHT, Michael, 93138 Lappersdorf (DE)
(86) Internationale Anmeldenummer: PCT/DE2001/000074
(87) Internationale Veröffentlichungsnummer: WO 2001/053897

(56) Entgegenhaltungen:
- US-A- 4 641 517
- GUDEA D D ET AL: "FAULT TOLERANT POWER CONTROLLER" PROCEEDINGS OF THE INTERSOCIETY ENERGY CONVERSION ENGINEERING CONFERENCE. (IECEC),US,NEW YORK, IEEE, Bd. CONF. 24, 6. August 1989 (1989-08-06), Seiten 231-237, XP000078771

## Beschreibung

Die Erfindung betrifft ein Verfahren zur Verhinderung von Fehlfunktionen in einem signalverarbeitendes System und ein Prozessorsystem, in dem Fehlfunktionen verhindert werden, insbesondere für Kraftfahrzeuge.

Insbesondere bei sicherheitstechnischen Anwendungen in Kraftfahrzeugen, beispielsweise bei einem elektromechanischen Bremssystem (brake by wire) oder einer elektromechanischen Lenkung (steer by wire) müssen Fehlfunktionen zuverlässig ausgeschlossen werden, und das Funktionieren des Systems muss gewährleistet bleiben.

Es ist bekannt mehrere Prozessoren redundante Berechnungen durchführen zu lassen, um bei Abweichungen zwischen den Rechenergebnissen auf eine Fehlfunktion zu schließen und eine Ausgabe von fehlerhaften Rechenergebnissen zu verhindern. Um N fehlerhafte Ausgabewerte tolerieren zu können, sind 2*N+1 Prozessoren nötig.

Es ist das Ziel der Erfindung ein Verfahren zur Verhinderung von Fehlfunktionen in einem signalverarbeitenden System und ein Prozessorsystem bereitzustellen, die auf einfache Weise eine Fehlfunktion unterbinden.

Dieses Ziel wird mit einem Verfahren und einem Prozessorsystem erreicht, wie sie in den unabhängigen Patentansprüchen definiert sind. Vorteilhafte Weiterbildungen der Erfindung sind Gegenstand der Unteransprüche.

Da die Recheneinheit mit der sequentiellen Abfolge von Startwerten nicht nur Ausgabewerte, sondern auch Trendwerte bildet, genügt eine einfache, separat ausgeführte Logikeinheit oder Trendwert-Logik, um ausgehend von denselben Startwerten korrespondierende Trendwerte zu bilden. Vorzugsweise bildet die Recheneinheit den Trendwert aus aufeinanderfolgenden Ausgabewerten. Aus dem Vergleich zwischen den Trendwerten der Trendwert-Logik und der Recheneinheit kann auf die Funktionsfähigkeit des Systems geschlossen werden. Sind die Trendwerte unterschiedlich liegt eine Fehlfunktion vor. Ändern sie sich über eine vorbestimmte Zeitspanne nicht mehr, so kann eine Fehlfunktion vorliegen. Letzteres kann beispielsweise mittels eines periodischen Testimpuls überprüft werden. Bei einer Fehlfunktion wird die Ausgabe des von der Recheneinheit gebildeten Ausgabewerts unterbunden.

Auf diese Weise wird verhindert, dass aufgrund der Fehlfunktion einer Recheneinheit beispielsweise eine Vollbremsung bei einer elektromechanischen Bremse oder ein Lenkeinschlag bei einer elektromechanischen Lenkung ausgelöst wird.

Von einer Recheneinheit erzeugte, unkritische systematische Fehler, die beispielsweise auf Fehlern der Software beruhen und lediglich zu geringfügigen Abweichungen vom optimalen bzw. gewünschten Ausgabewert führen, werden toleriert und beeinträchtigen die Funktionsfähigkeit des Systems nicht in sicherheitsrelevanter Weise. Kritische Fehler werden durch die diversitäre, also auf unterschiedliche Weise erfolgende Überprüfung erkannt. Die diversitäre Überprüfung wird vorzugsweise sowohl durch unterschiedliche Arten von Überprüfungseinheiten, die Trendwerte bilden, als auch durch unterschiedliche Überprüfungsmethoden erreicht, mit denen Trendwerte gebildet werden.

Weist das Prozessorsystem wenigstens eine zusätzliche, redundante Recheneinheit mit einer Trendwert-Logik auf, so kann bei unterschiedlichen Ausgabewerten der Recheneinheiten aufgrund der Trendwerte festgestellt werden, welche Recheneinheit das korrekte Ergebnis liefert. Eine dritte Recheneinheit zur Bildung einer Mehrheitsentscheidung ist nicht nötig.

Um eine Weitergabe des Ausgabewerts zuverlässig zu unterbinden, fällt die Vergleichseinrichtung in einer vorteilhaften Ausführungsform in einen inaktiven Zustand zurück, nachdem er den Ausgabewert freigegeben hat, so dass keine permanente Ausgabe des letzten Wertes (Hängen bleiben) erfolgen kann.

Liefern mehrere Signalquellen Startwerte, so kann entweder für jede Signalquelle ein eigener Trendwert oder für mehrere Signalquellen ein gemeinsamer Trendwert gebildet werden.

Vorzugsweise können in einer Recheneinheit wenigstens eine Basisfunktion und wenigstens eine höhere Funktion ausgeführt werden. Bei einer Basisfunktion handelt es sich um eine Steuerungsfunktion, die einen Startwert unmittelbar in einen Ausgabewert umsetzt, beispielsweise in eine Stellgröße für einen Elektromotor einer elektromechanischen Bremse. Verstößt der Ausgabewert gegen eine Systembedingung, beispielsweise wenn der Ausgabewert ein Blockieren eines Rads verursachen würde oder verursacht hat, so erfolgt ein regelnder Eingriff durch eine höhere Funktion.

Die höhere Funktion ermittelt einen modifizierten Ausgabewert, der aus Sicherheitsgründen einer Überprüfung durch eine redundante Recheneinheit bedarf. Ermitteln die Recheneinheiten unterschiedliche modifizierte Ausgabewerte, so liegt eine Fehlfunktion vor. Deren Ursache kann der Defekt einer der beiden Recheneinheiten sein. In diesem Fall unterbleibt eine Ausgabe des modifizierten Ausgabewerts. Statt dessen wird der von der Basisfunktion ermittelte Ausgabewert verwendet, sofern eine erfolgreiche Validierung über den beschriebenen Vergleich der Trendwerte stattgefunden hat. Auch bei einer Fehlfunktion einer von zwei Recheneinheiten wird das Ergebnis bzw. der Ausgabewert der funktionierenden Recheneinheit durchgeschaltet. Dadurch wird vermieden, dass eine Fehlfunktion zum Totalausfall des Systems führt.

Weitere Vorteile, Merkmale und Anwendungsmöglichkeiten der Erfindung ergeben sich aus der Beschreibung eines Ausführungsbeispiels in Verbindung mit den Zeichnungen. Es zeigen:
- Figur 1: ein Mehrprozessorsystem mit drei Recheneinheiten,
- Figur 2: ein Flussdiagramm,
- Figur 3: ein Steuergerät, das einen Aktor steuert, und
- Figur 4: einen Komparator, der von einem Steuergerät alle zu vergleichende Signale erhält..

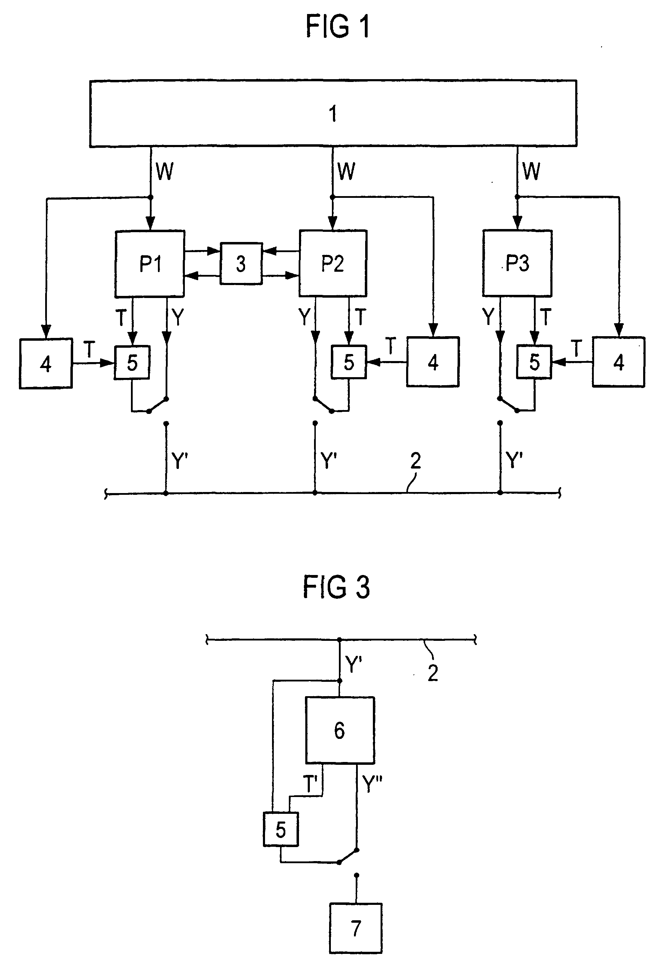

Figur 1 veranschaulicht die Zentralsteuerung oder den Zentralrechner eines elektromechanischen Bremssystems (brake by wire). Ein Schreib-Lese-Speicher 1 stellt für drei Recheneinheiten P1, P2 und P3 des Mehrprozessorsystems identische Startwerte w bereit. Als Eingangssignale werden dem Speicher digitalisierte Signale mindestens eines Sensors zugeführt, der die Stellung eines Bremspedals oder die auf das Bremspedal wirkende Kraft in einem Kraftfahrzeug misst.

Die Mikroprozessoren oder Recheneinheiten P1, P2, P3 weisen nicht dargestellte, separate Taktgeber oder Zeitbasen auf. Dadurch treten gewisse zeitliche Unterschiede beim Zugriff auf den Speicher 1 auf. Um dennoch die Konsistenz der sich verändernden Startwerte w zu gewährleisten, wird auf den Zugriff einer der Recheneinheiten P1, P2, P3 hin ein Überschreiben des Inhalts des Speichers 1 für einen vorbestimmten Zeitraum unterbunden. Der vorbestimmte Zeitraum entspricht der erwartbaren Differenz der Zeitbasen der Recheneinheiten.

Die Recheneinheiten sind über einen Systembus 2 mit mehreren Steuergeräten verbindbar, die jeweils einen Aktor steuern.

Die Recheneinheiten P1 und P2 führen sowohl höhere Funktionen als auch Basisfunktionen aus. Bei den Basisfunktionen handelt es sich um Steuerfunktionen zur Umsetzung einer Führungsgröße oder eines Startwerts w in eine Stellgröße oder Ausgabewert y für die Betätigung eines Aktors, um Funktionen zur Plausibilisierung eines Start- oder Ausgabewerts und um Funktionen zur Generierung eines Ersatzwerts im Falle von nicht plausiblen Start- oder Eingangswerten.

Die höheren Funktionen stellen an Hand eines Modells fest, ob ein vom Fahrerwunsch unabhängiger Eingriff zur Stabilisierung des Fahrzeugs notwendig ist, um ein Blockieren eines Rads oder das Schleudern des Fahrzeugs zu verhindern. Es wird also geprüft, ob ein Verstoß gegen Systembedingungen einen automatischen Eingriff in Fahrzeugsysteme erfordert. Um eine effektive Regelung durchführen zu können, sind die Recheneinheiten P1 und P2 mit nicht dargestellten Radsensoren verbunden.

Die Recheneinheiten P1 und P2 sind beide mit einer gemeinsamen Vergleichseinheit oder Komparator 3 verbunden. Dieser Komparator ermittelt, ob beim Durchführen höherer Funktionen die Ergebnisse identisch sind. Nur in diesem Fall darf ein Ausgabewert y von den Recheneinheiten an das Steuergerät des Aktors ausgegeben werden. Dieser Komparator 3 mit sogenannten Fail-Safe-Eigenschaften kann aus Schieberegistern und einer XOR-Logik aufgebaut werden. Die zu vergleichenden Werte werden so ergänzt, dass sie sich zumindest an einer Stelle unterscheiden. Somit kann die Funktionsfähigkeit der XOR-Logik überprüft werden, und mittels eines Relais kann verhindert werden, dass der Komparator in einem unerwünschten Zustand hängen bleibt.

Falls kein Eingriff durch eine höhere Funktion erforderlich ist, wird der Ausgabewert y lediglich von einer Basisfunktion berechnet. Zusätzlich wird aus dem Ausgabewert y ein Trendwert T berechnet. Der Ausgabewert y und der Trendwert T können zu einem Ausgabesignal y' zusammengefasst werden. Dieser Trendwert T wird durch eine Vergleichseinheit oder einen Komparator 5 mit einem Trendwert T verglichen, der mit einer separaten, diskret ausgeführten Trendwert-Logik 4 erzeugt ist. Die Trendwert-Logik 4 kann beispielsweise mit einem Schieberegister, einem Latch-Register oder einer ALU gebildet sein. Der Komparator 5 ist genau wie der Komparator 3 aufgebaut.

Der Komparator 5 schaltet den Ausgabewert oder das Ausgabesignal y' mittels eines Halbleiterbauelements oder eines Relais auf den Systembus 2 durch, wenn die Trendwerte der Trendwert-Logik 4 und der zugehörigen Recheneinheit identisch sind.

Jede Recheneinheit P1 bis P3 stellt zusammen mit der zugehörigen Trendwert-Logik 4 und dem zugehörigen Komparator 5 einen Datenpfad zwischen dem Speicher 1 und dem Bus 2 dar. Mindestens zwei solcher Datenpfade bilden einen Datenkanal bezüglich des Startwerts w oder des Eingangssignals. Jeder Datenkanal hat die Eigenschaft, die Weitergabe eines fehlerhaften Ausgabewerts y zu unterbinden und somit Fehlfunktionen zu vermeiden.

Jeder Datenpfad gibt entweder korrekte oder keine Daten bzw. Ausgabewerte aus (Fail-Silence-Eigenschaft). Durch die redundante Ausführung der Pfade zwischen dem Startwert w oder dem Eingangssignal und dem Ausgang des Kanals, also dem Bus 2, bleibt die Funktionsfähigkeit des Systems auch beim Auftreten von Fehlern gewährleistet (Fault-Tolerance-Eigenschaft).

Die Recheneinheit P3 führt nur Basisfunktionen aus. Ihre Ausgabewerte y werden benötigt, wenn die beiden Recheneinheiten P1 und P2 keine gültigen Ausgabewerte y liefern.

Alle validierten Ausgabewerte y' der Recheneinheiten P1 bis P3 werden auf den Bus 2 gelegt.

Weitere derart ausgestaltete Datenkanäle können für zusätzliche Eingangs- oder Startwerte zur Verfügung stehen, beispielsweise für die auf ein Bremspedal ausgeübte Kraft.

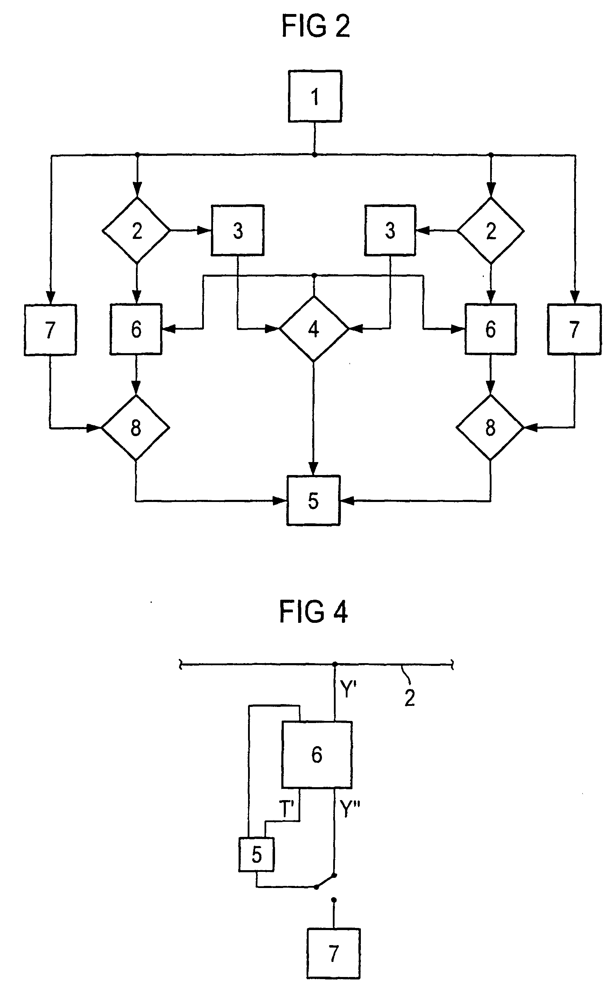

Figur 2 veranschaulicht den Ablauf des Verfahrens in dem Datenkanal, wobei allerdings nur die Pfade mit den Recheneinheiten P1 und P2 von Figur 1 betrachtet werden.

In Schritt 1 werden für die Recheneinheiten einheitliche Startwerte zur Verfügung gestellt. In Schritt 2 wird von den zwei redundanten Recheneinheiten P1 und P2 geprüft, ob die Umsetzung des Startwerts zu einer Verletzung von Systembedingungen führen würde.

Falls dies der Fall ist, so wird in Schritt 3 von den beiden Recheneinheiten jeweils ein von höheren Funktionen modifizierter Ausgabewert berechnet. Die Ausgabewerte werden in Schritt 4 miteinander verglichen. Falls sie identisch sind, wird dem Ausgabewert eine Kennung hinzugefügt. Hierfür steht eine Breite von zwei Bit des auszugebenden Signals (Ausgabesignal) zur Verfügung. Anschließend wird der Ausgabewert w und die Kennung, also das Ausgabesignal y', in Schritt 5 unter den nachfolgend erläuterten Bedingungen auf den Systembus 2 ausgegeben.

In Schritt 6 wird jeweils ein Ausgabewert durch unmittelbare Umsetzung des Startwerts mittels einer Steuerungsfunktion (Basisfunktion) ermittelt. Ferner wird in Schritt 6 von den redundanten Recheneinheiten jeweils ein Trendwert aus zwei aufeinanderfolgenden Ausgabewerten gebildet. Dieser Trendwert wird dem berechneten Ausgabewert hinzugefügt und belegt zwei Bit des auszugebenden Signals (Ausgabesignal). In den zwei Bit ist statt der Kennung von Schritt 4 kodiert, ob der Wert des Ausgabewerts gegenüber dem vorhergehenden Ausgabewert unverändert, größer oder kleiner ist.

Dem Ausgabewert wird daher ein Signal mit einer Breite von zwei Bit hinzu gefügt, das entweder einen Trendwert oder eine Kennung für eine höhere Funktion enthält.

Im Schritt 7 wird parallel hierzu von einer Trendwert-Logik in gleicher Weise ein Trendwert für aufeinanderfolgende Startwerte gebildet. Dieser Trendwert wird ebenfalls durch zwei Bit ausgedrückt.

In Schritt 8 werden die in Schritt 7 und in Schritt 6 gebildeten Trendwerte miteinander verglichen. Die Berechnung der Trendwerte durch die Trendwertlogiken und die Recheneinheiten hat jeweils zumindest mittelbar denselben Startwert als Grundlage, da in Schritt 6 zur (unmittelbaren) Trendwertbildung die zu Ausgabewerten veränderten Startwerte herangezogen werden. Ergibt der Vergleich der Trendwerte Übereinstimmung, so wird der in Schritt 6 ermittelte Ausgabewert in Schritt 5 auf den Bus ausgegeben, sofern von den höheren Funktionen in den Schritten 3 und 4 kein gültiger Ausgabewert mit hinzugefügter Kennung bereitgestellt wurde. Andernfalls wird der mit der Kennung versehene Ausgabewert der höheren Funktionen auf den Systembus ausgegeben. Dies unterbleibt allerdings, wenn der Vergleich der Trendwerte keine Übereinstimmung ergeben hat.

Falls in den beiden parallelen Schritten 8 beide Ausgabewerte (generiert von den Basisfunktionen oder von den höheren Funktionen) auf die beschriebene Weise validiert worden sind, werden beide ausgegeben.

Figur 3 veranschaulicht ein Prozessorsystem mit einem Steuergerät 6, das einen Aktor 7 in Form eines Elektromotors einer elektromechanischen Bremse steuert. Der Bus 2 verbindet das Prozessorsystem von Figur 3 über einen nicht dargestellten Bus-Kontroller mit dem in Figur 1 dargestellten Mehrprozessorsystem. Beide Prozessorsysteme können daher als ein verteiltes System aufgefasst werden.

Das Steuergerät 6 empfängt vom Bus 2 jeweils die Ausgabesignale y' der Recheneinheiten P1 bis P3 von Figur 1. Es bildet aus den in den Ausgabesignalen y' enthaltenen Ausgabewerten der Recheneinheiten einen Mittelwert. Zur Mittelwertbildung werden allerdings nur Ausgabesignale mit übereinstimmenden Trendwerten herangezogen. Aus dem Mittelwert bestimmt das Steuergerät eine Stellgröße y'' und gibt diese an den Aktor 7 aus. Die Stellgröße y'' kann identisch mit einem im Ausgabesignal y' enthaltenen Ausgabewert y sein. Zusätzlich bestimmt das Steuergerät 6 aus der Stellgröße y'' in der in Zusammenhang mit Figur 2 beschriebenen Weise einen Trendwert T'.

Der Komparator 5 vergleicht den vom Steuergerät 6 aufgrund der Stellgröße y'' gebildeten Trendwert T' mit den in den Ausgabesignalen y' enthaltenen Trendwerten. Hierzu wird durch eine Mehrheitsentscheidung ein eindeutiger bzw. einheitlicher Trendwert gebildet. Stimmen die Trendwerte überein, so erfolgt eine Ausgabe der Stellgröße y'' auf den Aktor 7. Andernfalls wird eine Ausgabe unterbunden. Alternativ kann die Ausgabe auch unter der Bedingung unterbunden werden, dass mehrere aufeinanderfolgende Vergleiche von Trendwerten eine Ungleichheit erbrachten.

Falls im Ausgabesignal y' von wenigstens zwei Recheneinheiten kein Trendwert, sondern eine Kennung für eine höhere Funktion enthalten ist, erfolgt kein Vergleich durch den Komparator 5. Die Stellgröße y'' wird in diesem Fall ohne Prüfung an den Aktor 7 ausgegeben.

In der in Figur 4 veranschaulichten Ausführungsform ist im Steuergerät 6 ein Bus-Kontroller integriert. Um einen eigenen Bus-Kontroller für den Komparator 5 zu sparen, kann der unmittelbar im Ausgabesignal y' enthaltene Trendwert vom Steuergerät 6 für den Komparator in der oben beschriebenen Weise bereitgestellt werden. Der Komparator 5 erhält daher beide zu vergleichende Signale vom Steuergerät, d. h., den vom Steuergerät 6 auf Grundlage des Ausgabesignals y' gebildeten Trendwert T und den auf Grundlage der Stellgröße y'' gebildeten Trendwerts T'.

## Patentansprüche

1. Verfahren zur Verhinderung von Fehlfunktionen in einem signalverarbeitenden System mit den Schritten:
- eine Abfolge von Startwerten (w) wird von einer Recheneinheit (P1; P2; P3) eingelesen,
- eine zusätzliche, separate Trendwert-Logik (4) bestimmt aus den Startwerten (w) einen Trendwert (T), der Auskunft gibt, ob sich der Startwert (w) verändert hat,
- aus denselben Startwerten (w) wird von der Recheneinheit (P1; P2; P3) ein Ausgabewert (y) und ein Trendwert (T) gebildet, wobei auch dieser Trendwert Auskunft gibt, ob sich der Startwert (w) verändert hat,
- die von der Recheneinheit (P1; P2; P3) und die von der Trendwert-Logik (4) bestimmten Trendwerte (T) werden miteinander verglichen,
- wenn die von der Recheneinheit (P1; P2; P3) und die von der Trendwert-Logik (4) bestimmten Trendwerte (T) übereinstimmen, wird der Ausgabewert (y) ausgegeben.

2. Verfahren nach Anspruch 1, **dadurch gekennzeichnet, dass** die Recheneinheit den Trendwert (T) auf Grundlage des Ausgabewerts (y) bildet.

3. Verfahren nach Anspruch 1, **dadurch gekennzeichnet, dass** die von der Trendwert-Logik (4) und der Recheneinheit (P1; P2; P3) bestimmten Trendwerte (T) von einer Vergleichseinrichtung (5) verglichen werden, dass die Vergleichseinrichtung (5) bei Übereinstimmung der Trendwerte (T) den Ausgabewert (y) freigibt, und dass die Vergleichseinrichtung (5) anschließend eine Ausgabe des Ausgabewerts (y) sperrt.

4. Verfahren nach einem der vorhergehenden Ansprüche, **dadurch gekennzeichnet, dass** mehrere Signalquellen Startwerte (w) liefern, und dass für jede Signalquelle ein eigener Trendwert (T) gebildet wird.

5. Verfahren nach Anspruch 1 oder 2, **dadurch gekennzeichnet, dass** mehrere Signalquellen Startwerte (w) liefern, und dass für wenigstens zwei Signalquellen ein gemeinsamer Trendwert (T) gebildet wird.

6. Verfahren nach einem der vorhergehenden Ansprüche, **dadurch gekennzeichnet, dass** von einer Recheneinheit (P1; P2; P3) der Ausgabewert (y) und der Trendwert (T) an ein Steuergerät (6) ausgegeben werden, dass das Steuergerät (6) aus dem Ausgabewert (y) eine Stellgröße (y'') und einen Trendwert (T') bildet, dass der Trendwert (T) mit dem Trendwert (T') verglichen wird, und dass das Steuergerät (6) die Stellgröße (y'') ausgibt, wenn die Trendwerte (T; T') identisch sind.

7. Verfahren nach einem der vorhergehenden Ansprüche, **dadurch gekennzeichnet, dass**
- von der Recheneinheit (P1) der Startwert (w) durch eine Steuerungsfunktion in einen Ausgabewert (y) umgesetzt wird,
- dieser Ausgabewert (y) auf die Einhaltung von Systembedingungen untersucht wird,
- bei einem Verstoß gegen eine Systembedingungen, eine Regelung durchgeführt wird, so dass ein modifizierter Ausgabewert zur Einhaltung der Systembedingungen führt,
- der modifizierte Ausgabewert mit dem modifizierten Ausgabewert einer redundanten Recheneinheit (P2) verglichen wird, und
- der modifizierte Ausgabewert ausgegeben wird, wenn die Ergebnisse beider Recheneinheiten (P1; P2) identisch sind.

8. Verfahren nach dem vorhergehenden Anspruch, **dadurch gekennzeichnet, dass** der durch eine Steuerungsfunktion ermittelte Ausgabewert (y), trotz des Verstoßes gegen eine Systembedingung, von einer der Recheneinheiten (P1; P2) ausgegeben wird, wenn die modifizierten Ausgabewerte ungleich sind und die Trendwerte (T) der Trend-Logik (4) und der zugehörigen Recheneinheit (P1; P2) übereinstimmen.

9. Prozessorsystem, das aufweist:
- wenigstens eine Recheneinheit (P1; P2; P3), die aus aufeinander folgenden Startwerten (w) einen Ausgabewert (y) und einen Trendwert (T) bestimmt, wobei der Trendwert (T) Auskunft gibt, ob sich der Startwert (w) verändert hat,
- eine Trendwert-Logik (4) zur Bildung eines Trendwerts (T) aus denselben aufeinanderfolgenden Startwerten (w), wobei auch dieser Trendwert (T) Auskunft gibt, ob sich der Startwert (w) verändert hat,
- eine mit der Trendwert-Logik (4) und der Recheneinheit (P1; P2; P3) verbundene Vergleichseinrichtung (3; 5) zum Vergleichen der Trendwerte (T) der Recheneinheit (P1; P2; P3) und der Trendwert-Logik (4) und zum Ausgeben des Ausgabewerts (y), wenn die von der Recheneinheit (P1; P2; P3) und von der Trendwert-Logik (4) bestimmten Trendwerte (T) übereinstimmen .

10. Prozessorsystem nach dem vorhergehenden Anspruch, **dadurch gekennzeichnet, dass** eine Mehrzahl von Recheneinheiten (P1; P2; P3) mit einem Steuergerät (6) verbunden ist, dass das Steuergerät (6) über eine Vergleichseinrichtung (5) mit einem Aktor (7) verbunden ist, und dass die Vergleichseinrichtung (5) ebenfalls mit der Mehrzahl von Recheneinheiten (P1; P2; P3) verbunden ist.

## Claims

1. Method for preventing error malfunctions in a signal processing system with the stages:
- a sequence of initial values (w) is read in by a computer unit (P1; P2; P3),
- an additional, separate trend value logic system (4) uses the initial values (w) to determine a trend value (T), which provides data about whether the initial value (w) has changed,
- the same initial values (w) are used by the computer unit (P1; P2; P3) to create an output value (y) and a trend value (T), with this trend value also providing data about whether the initial value (w) has changed,
- the trend values (T) determined by the computer unit (P1; P2; P3) and those determined by the trend value logic system (4) are compared,
- if the trend values (T) determined by the computer unit (P1; P2; P3) and those determined by the trend value logic system (4) correspond, the output value (y) is output.

2. Method according to Claim 1, **characterised in that** the computer unit creates the trend value (T) on the basis of the output value (y).

3. Method according to Claim 1, **characterised in that** the trend values (T) determined by the trend value logic system (4) and the computer unit (P1; P2; P3) are compared by a comparison unit (5), the comparison unit (5) releases the output value (y) if the trend values (T) correspond, and the comparison unit (5) then blocks output of the output value (y).

4. Method according to one of the preceding claims, **characterised in that** a number of signal sources supply initial values (w) and a specific trend value (T) is created for each signal source.

5. Method according to Claim 1 or 2, **characterised in that** a number of signal sources supply initial values (w) and a common trend value (T) is created for at least two signal sources.

6. Method according to one of the preceding claims, **characterised in that** the output value (y) and the trend value (T) are output by a computer unit (P1; P2; P3) to a control device (6), the control device (6) creates a correcting variable (y") and a trend value (T') from the output value (y), the trend value (T) is compared with the trend value (T') and the control device (6) outputs the correcting variable (y"), if the trend values (T; T') are identical.

7. Method according to one of the preceding claims, **characterised in that**
- the initial value (w) is converted by the computer unit (P1) using a control function into an output value (y),
- this output value (y) is tested for system condition compliance,
- if a system condition is infringed, a control operation is carried out so that a modified output value results in system condition compliance,
- the modified output value is compared with the modified output value of a redundant computer unit (P2), and
- the modified output value is output, if the results of both computer units are identical.

8. Method according to the preceding claim, **characterised in that** the output value (y) determined using a control function, despite infringement of a system condition, is output by one of the computer units (P1; P2), if the modified output values are different and the trend values (T) of the trend logic system (4) and the associated computer unit (P1; P2) correspond.

9. Processor system that has:
- at least one computer unit (P1; P2; P3), which uses successive initial values (w) to determine an output value (y) and a trend value (T), with the trend value (T) providing data about whether the initial value (w) has changed,
- a trend value logic system (4) for creating a trend value (T) from the same successive initial values (w), with this trend value (T) also providing data about whether the initial value (w) has changed,
- a comparison unit (3; 5) connected to the trend value logic system (4) and the computer unit (P1; P2; P3) for comparing the trend values (T) of the computer unit (P1; P2; P3) and the trend value logic system (4) and for outputting the output value (y), if the trend values (T) determined by the computer unit (P1; P2; P3) and the trend value logic unit (4) correspond.

10. Processor system according to the preceding claim, **characterised in that** a plurality of computer units (P1; P2; P3) are connected to the control device (6), the control device (6) is connected via a comparison unit (5) to an actuator (7) and the comparison unit (5) is also connected to the plurality of computer units (P1; P2; P3).

## Revendications

1. Procédé pour empêcher des mauvais fonctionnements dans un système de traitement de signal, comportant les étapes consistant à :
- faire suivre une suite de valeurs de départ (w) par une unité de calcul (P1; P2; P3),
- déterminer par une logique de tendance séparée (4), supplémentaire, d'après les valeurs de départ (w) une valeur de tendance (T) qui indique si la valeur de départ (w) a changé,
- faire former, d'après les mêmes valeurs de départ (w), par l'unité de calcul (P1; P2; P3), une valeur de sortie (y) et une valeur de tendance (T), cette valeur de tendance indiquant aussi si la valeur de départ (w) a changé,
- comparer l'une à l'autre les valeurs de tendance (T) déterminées par l'unité de calcul (P1; P2; P3) et celles déterminées par la logique de tendance(4),
- si les valeurs de tendance (T) déterminées par l'unité de calcul (P1; P2; P3) et celles déterminées par la logique de tendance (4) coïncident, sortir la valeur de sortie (y).

2. Procédé selon la revendication 1, **caractérisé en ce que** l'unité de calcul forme la valeur de tendance (T) sur la base de la valeur de sortie (y).

3. Procédé selon la revendication 1, **caractérisé en ce que** les valeurs de tendance (T) déterminées par la logique de tendance (4) et l'unité de calcul (P1; P2; P3) sont comparées par un dispositif de comparaison (5), **en ce que**, en cas de coïncidence des valeurs de tendance (T), le dispositif de comparaison (5) délivre la valeur de sortie (y), et **en ce que** le dispositif de comparaison (5) bloque ensuite une sortie de la valeur de sortie (y).

4. Procédé selon l'une des revendications précédentes, **caractérisé en ce que** plusieurs sources de signal délivrent des valeurs de départ (w), et qu'une valeur de tendance (T) propre est formée pour chaque source de signal.

5. Procédé selon la revendication 1 ou 2, **caractérisé en ce que** plusieurs sources de signal délivrent des valeurs de départ (w), et **en ce qu'**une valeur de tendance (T) commune est formée pour au moins deux sources de signal.

6. Procédé selon l'une des revendications précédentes, **caractérisé en ce que** la valeur de sortie (y) et la valeur de tendance (T) sont appliquées à un appareil de commande (6) par une unité de calcul (P1; P2; P3), **en ce que** l'appareil de commande (6) forme à partir de la valeur de sortie (y) une grandeur de réglage (y") et une valeur de tendance (T'), **en ce que** la valeur de tendance (T) est comparée à la valeur de tendance (T'), et **en ce que** l'appareil de commande (6) sort la grandeur de réglage (y"), si les valeurs de tendance (T; T') sont identiques.

7. Procédé selon l'une des revendications précédentes, **caractérisé en ce que** :
- la valeur de départ (w) est convertie par l'unité de calcul (P1) grâce à une fonction de commande en une valeur de sortie (y),
- on examine si cette valeur de sortie (y) respecte les conditions du système,
- en cas de violation d'une condition du système, un réglage est effectué, de manière qu'une valeur de sortie modifiée conduise au respect des conditions du système,
- la valeur de sortie modifiée est comparée à la valeur de sortie modifiée d'une unité de calcul redondante (P2), et
- la valeur de sortie modifiée est sortie, si les résultats des deux unités de calcul (P1; P2) sont identiques.

8. Procédé selon la revendication précédente, **caractérisé en ce que** la valeur de sortie (y) déterminée par une fonction de commande, est sortie malgré la violation d'une condition du système, par l'une des unités de calcul (P1; P2), si les valeurs de sortie modifiées sont inégales et si les valeurs de tendance (T) de la logique de tendance (4) et de l'unité de calcul (P1; P2) associée coïncident.

9. Système à processeur comportant :
- au moins une unité de calcul (P1; P2; P3), qui détermine d'après des valeurs de départ (w) successives une valeur de sortie (y) et une valeur de tendance (T), la valeur de tendance (T) indiquant si la valeur de départ (w) a changé,
- une logique de valeur de tendance (4) pour former une valeur de tendance (T) d'après les mêmes valeurs de départ (w) successives, cette valeur de tendance (T) indiquant aussi si la valeur de départ (w) a changé,
- un dispositif de comparaison (3; 5) relié à la logique de valeur de tendance (4) et à l'unité de calcul (P1; P2; P3) pour comparer les valeurs de tendance (T) de l'unité de calcul (P1; P2; P3) et de la logique de valeur de tendance (4) et pour sortir la valeur de sortie (y), si les valeurs de tendance (T) déterminées par l'unité de calcul (P1; P2; P3) et par la logique de valeur de tendance (4) coïncident.

10. Système à processeur selon la revendication précédente, **caractérisé en ce qu'**une multiplicité d'unités de calcul (P1; P2; P3) est reliée à un appareil de commande (6), **en ce que** l'appareil de commande (6) est relié par un dispositif de comparaison (5) à un actionneur (7), et **en ce que** le dispositif de comparaison (5) est également relié à la multiplicité d'unités de calcul (P1; P2; P3).
